(19) Europäisches Patentamt
European Patent Office
Office européen des brevets

(11) EP 4 089 759 A1

(12) EUROPEAN PATENT APPLICATION
published in accordance with Art. 153(4) EPC

(43) Date of publication:
16.11.2022 Bulletin 2022/46

(51) International Patent Classification (IPC):
H01M 4/13 (2010.01)    H01M 4/139 (2010.01)

(21) Application number: 22710473.4

(52) Cooperative Patent Classification (CPC):
Y02E 60/10; Y02P 70/50

(22) Date of filing: 05.01.2022

(86) International application number:
PCT/CN2022/070377

(87) International publication number:
WO 2022/199210 (29.09.2022 Gazette 2022/39)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.03.2021 CN 202110320955

(71) Applicant: Ningde Amperex Technology Limited
Zhangwan Town, Jiaocheng District
Ningde City
Fujian 352100 (CN)

(72) Inventor: ZHANG, Luran
Fujian 352100 (CN)

(74) Representative: Klunker IP
Patentanwälte PartG mbB
Destouchesstraße 68
80796 München (DE)

(54) POLE PIECE, ELECTROCHEMICAL DEVICE, AND ELECTRONIC DEVICE

(57) This application An electrode plate includes a current collector, where a functional coating and a non-coating area are provided on at least one surface of the current collector, the functional coating includes a functional area and an extension area that extends from the functional area to the non-coating area, and the extension area has a minimum thickness greater than 0 and a maximum thickness less than a thickness of the functional area. This application can relieve the problem of concentrated stress on the current collector in a transition area between the functional coating and the non-coating area on the electrode plate and improve mechanical property and a current conduction effect of the current collector, thereby improving properties such as cycling performance and safety of the electrochemical apparatus.

FIG. 3

Processed by Luminess, 75001 PARIS (FR)

**Description**

**TECHNICAL FIELD**

The present invention relates to the field of electrochemical apparatuses, and in particular, to an electrode plate, an electrochemical apparatus, and an electronic apparatus.

**BACKGROUND**

Electrochemical apparatuses such as lithium-ion secondary batteries are widely applied. Scientific and technological development is accompanied by higher requirements for energy density of electrochemical apparatuses. To guarantee or increase the energy density of an electrochemical apparatus, an electrode plate coating generally needs a higher compacted density. Therefore, high pressure needs to be exerted during a cold pressing manufacturing process of an electrode plate. Existing electrode plates are generally manufactured with gap coating. That is, a functional coating and a non-coating area are present on a surface of a current collector then the current collector is slit along the non-coating area to electrode plates. The manufactured electrode plate has a functional coating and a non-coating area. Due to a thickness difference of the functional coating and the non-coating area, when the electrode plate experiences relatively high external pressure (such as the pressure during the cold pressing manufacturing process or other external pressure), concentrated stress caused by the foregoing pressure is present in a part (or a transition area) of the functional coating in proximity of the non-coating area, causing irreversible deformation to the current collector in the transition area, thereby weakening mechanical properties of the current collector and affecting a current conduction effect in the electrochemical apparatus.

**SUMMARY**

The present invention provides an electrode plate, an electrochemical apparatus, and an electronic apparatus, which resolve the problem that concentrated stress is present in a transition area of an electrode plate coating in proximity of a non-coating area during a cold pressing manufacturing process in the prior art, causing problems such as poor mechanical properties and a poor current conduction effect of a current collector.

According to one aspect of the present invention, an electrode plate is provided, including a current collector, where a functional coating and a non-coating area are provided on at least one surface of the current collector. The functional coating includes a functional area and an extension area that extends from the functional area to the non-coating area. The extension area has a minimum thickness greater than 0 and a maximum thickness less than a thickness of the functional area.

According to an embodiment of the present invention, the non-coating area includes at least one of a naked foil area that is located on a side of the functional coating, and a groove that is provided in the functional coating and that exposes a surface of the current collector, where a bottom face of the groove is the current collector, and at least two side faces of the groove are the functional coating.

According to an embodiment of the present invention, a thickness of the extension area is substantially unchanged or decreasing in an extension direction toward the non-coating area.

According to an embodiment of the present invention, a width of the extension area ranges from 0.1 mm to 3 mm in a direction from the functional area to the non-coating area.

According to an embodiment of the present invention, in the direction from the functional area to the non-coating area, a thickness of the extension area at a 1/2 width position is less than a thickness at a joint of the extension area and the functional area.

According to an embodiment of the present invention, in the direction from the functional area to the non-coating area, a thickness of a 2/3 width position of the extension area is less than a thickness of a 1/3 width position of the extension area.

According to an embodiment of the present invention, a surface of the extension area is one of a flat surface, an inclined surface, and a cambered surface.

According to an embodiment of the present invention, the functional area has an even thickness which satisfies

$$0.1 \leq \frac{T_2}{T_1} \leq 0.7$$

, where $T_1$ is the thickness of the functional area, and $T_2$ is the minimum thickness of the extension area.

According to an embodiment of the present invention, the thickness of the functional area ranges from 50 $\mu$m to 150 $\mu$m.

According to an embodiment of the present invention, the minimum thickness of the extension area ranges from 10 $\mu$m to 70 $\mu$m.

According to an embodiment of the present invention, the electrode plate is a negative electrode plate that satisfies $T_1 \times CW = A \times W \times \frac{T_2}{T_1}$ ; or the electrode plate is a positive electrode plate that satisfies $T_1 \times CW = B \times W \times \frac{T_2}{T_1}$

; where $T_1$ is the thickness of the functional area, measured in $\mu$m; $T_2$ is the minimum thickness of the extension area, measured in $\mu$m; W is a thickness of the extension area in a direction from the functional area to the non-coating area, measured in mm; CW is a surface density of the functional area, measured in mg/1540.25 mm$^2$; A is a random number greater than or equal to 10 and less than or equal to 35; and B is a random number greater than or equal to 20 and less than or equal to 60.

According to another aspect of the present invention, an electrochemical apparatus is provided, including the foregoing electrode plate.

According to still another aspect of the present invention, an electronic apparatus is provided, including the foregoing electrochemical apparatus.

With the foregoing electrode plate structure design of the present invention, when the electrode plate experiences external pressure, no excessive pressure is present in the extension area (the transition area of the functional area in proximity of the non-coating area), so that concentrated stress on the transition area can be relieved, avoiding deformation of the current collector and guaranteeing mechanical properties of the current collector and a current conduction effect in the electrochemical apparatus, thereby improving properties such as cycling performance, safety, and service life of the electrochemical apparatus. In addition, while guaranteeing the foregoing properties of the electrode plate, the present invention does not affect efficiency of the cold pressing manufacturing process of the electrode plate, which is of great significance for actual industrial application.

**BRIEF DESCRIPTION OF DRAWINGS**

FIG. 1 is a planar view of an electrode plate structure with a functional coating and a groove (with no extension area illustrated);
FIG. 2 is a sectional view of an electrode plate structure with a functional coating and a groove (with no extension area illustrated);
FIG. 3 is a sectional view of an electrode plate structure according to an embodiment of the present invention;
FIG. 4 is a sectional view of an electrode plate structure according to another embodiment of the present invention;
FIG. 5 is a sectional view of an electrode plate structure according to still another embodiment of the present invention; and
FIG. 6 is a planar view of an electrode plate structure according to an embodiment of the present invention.

Description of reference signs: 1. current collector; 2. functional coating; 21. functional area; 22. extension area; 3. non-coating area; and W. width of extension area.

**DESCRIPTION OF EMBODIMENTS**

To make persons skilled in the art better understand the solutions of the present invention, the following further describes the present invention in detail with reference to the accompanying drawings.

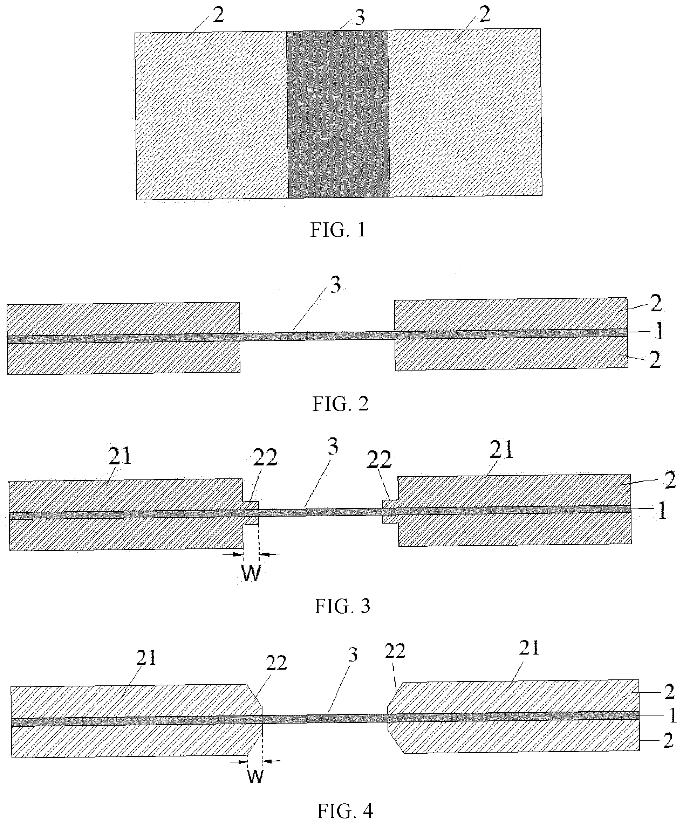

As shown in FIG. 1 to FIG. 6, the electrode plate of the present invention includes a current collector 1, where a functional coating 2 and a non-coating area 3 are provided on at least one surface of the current collector 1, the functional coating 2 includes a functional area 21 and an extension area 22 that extends from the functional area 21 to the non-coating area 3, and the extension area 22 has a minimum thickness (that is, thickness of the extension area 22 at a thinnest position) greater than 0 and a maximum thickness (that is, thickness of the extension area 22 at a thickest position) less than a thickness of the functional area 21.

The thickness of the extension area 22 is a perpendicular distance from a point on a surface of the extension area 22 to the current collector 1. In a specific implementation, a cross section of the extension area 22 in a thickness direction may be measured with a microscope, to determine thicknesses of the extension area 22 at different positions, for example, the maximum thickness, the minimum thickness, and following thicknesses at a 1/2 width position, 1/3 width position, and 2/3 width position. The implementation, however, is not limited thereto. The thickness may alternatively be measured by using other conventional methods.

The non-coating area 3 is a naked foil area without a coating. Generally, an interface thickness of the functional coating (a sum of the thickness of the functional area 21 and the thickness of the current collector 1) may be 5 times to 20 times the thickness of the non-coating area 3 (that is, thickness of the current collector), without being limited thereto.

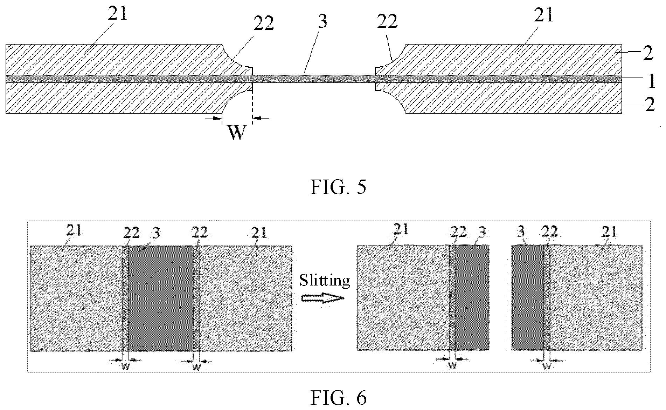

Specifically, the non-coating area 3 may be a naked foil area reserved for welding a tab, or may be another area without a coating designed as required. In some embodiments, the non-coating area 3 includes at least one of a naked foil area that is located on a side of the functional coating 2 (as shown in FIG. 6, where the left side is a schematic structural diagram of a base material including two electrode plates; and the right side is a schematic structural diagram of the two electrode plates obtained by slitting the base material), and a groove that is provided in the functional coating 2 and that exposes a surface of the current collector (with a groove structure shown in FIG. 1 and FIG. 2), where a bottom face of the groove is the current collector, and at least two side faces of the groove are the functional coating. A cross section of the non-coating area is, for example, rectangular/square (as shown in FIG. 6), or round, or in other shapes. A quantity of the non-coating area 3 may be one or more, which may be set as required in a specific implementation.

In some embodiments, the thickness of the extension area 22 is substantially unchanged or decreasing in an extension direction toward the non-coating area 3, which helps to resolve the problem of concentrated stress in a transition area between the functional coating and the non-coating area, improve strength of the current collector, and further guarantee functioning of the electrode plate. Specifically, a thickness of the extension area 22 at a position closest to the non-coating area 3 is the minimum thickness of the extension area 22, and a thickness thereof at a position farthest away from the non-coating area 2 is the maximum thickness of the extension area 22. The minimum thickness of the extension area 22 is greater than 0, meaning that the extension area 22 has a side face parallel to a thickness direction of the functional coating, on a side in proximity of the non-coating area 3. In some embodiments, that a thickness of the extension area 22 is substantially unchanged in an extension direction toward the non-coating area 3 means that a thickness difference of the extension area 22 is within a range of 2 $\mu$m in the extension direction toward the non-coating area 3 (that is, a difference between the maximum thickness and the minimum thickness of the extension area 22 is within 2 $\mu$m, for example, within 1 $\mu$m or a smaller range).

For example, as shown in FIG. 3, the surface of the extension area 22 is a flat surface, meaning the thickness of the extension area 22 is unchanged in the extension direction toward the non-coating area 3, and the non-coating area 3 has an even thickness (a minimum thickness and a maximum thickness of the non-coating area 3 are substantially equal, which is defined as a thickness difference within a range of 1 $\mu$m); or as shown in FIG. 4, the surface of the extension area 22 is an inclined surface, meaning the thickness of the extension area 22 is gradually decreasing in the direction toward the non-coating area 3, with a decreasing rate unchanged; or as shown in FIG. 5, the surface of the extension area 22 is a cambered surface, which may be specifically a cambered concave surface (the cambered surface is a concave one), meaning the thickness of the extension area 22 is gradually decreasing in the direction toward the non-coating area 3, with a decreasing rate gradually reduced in the direction toward the non-coating area 3, or may be a cambered convex surface (the cambered surface is a convex one), meaning the thickness of the extension area 22 is gradually decreasing in the direction toward the non-coating area 3, with a decreasing rate gradually increased in the direction toward the non-coating area 3. In this embodiment, the accompanying drawings merely show an electrode plate structure with a cambered surface that is concave, and an electrode plate structure with a cambered surface that is convex is not shown in the accompanying drawings.

In some embodiments, in the direction from the functional area 21 to the non-coating area 3, a thickness of the extension area 22 at a 1/2 width position is less than a thickness at a joint of the extension area 22 and the functional area 21.

In some embodiments, in the direction from the functional area 21 to the non-coating area 3, a thickness of the extension area 22 at a 2/3 width position is less than a thickness at a 1/3 width position of the extension area 22.

In some embodiments, the functional area has an even thickness which satisfies $0.1 \leq \frac{T_2}{T_1} \leq 0.7$, where $T_1$ is the thickness of the functional area 21, $T_2$ is the minimum thickness of the extension area 22, and $\frac{T_2}{T_1}$ is, for example, 0.1, 0.2, 0.3, 0.4, 0.5, 0.6, 0.7, or a range defined by any two of these numbers, which helps to further relieve the problem of concentrated stress in the transition area and improve properties such as energy density of the electrode plate.

The functional area 21 has an even thickness. The even thickness means that a minimum thickness and a maximum thickness of the functional area 21 are substantially equal, which is defined as a thickness difference within 3 $\mu$m, for example, within 2 $\mu$m, 1 $\mu$m, or a smaller range.

Specifically, in some embodiments, the thickness $T_1$ of the functional area 21 may range from 50 $\mu$m to 150 $\mu$m, for example, being 50 $\mu$m, 60 $\mu$m, 70 $\mu$m, 80 $\mu$m, 90 $\mu$m, 100 $\mu$m, 110 $\mu$m, 120 $\mu$m, 130 $\mu$m, 140 $\mu$m, 150 $\mu$m, or in a range defined by any two of these numbers, and the minimum thickness $T_2$ of the extension area 22 may range from 10 $\mu$m to 70 $\mu$m, for example, being 10 $\mu$m, 20 $\mu$m, 30 $\mu$m, 40 $\mu$m, 50 $\mu$m, 60 $\mu$m, 70 $\mu$m, or in a range defined by any two of these numbers.

In some embodiments, a width W of the extension area 22 ranges from 0.1 mm to 3 mm in the direction from the functional area 21 to the non-coating area 3, for example, being 0.1 mm, 0.5 mm, 1 mm, 1.5 mm, 2 mm, 2.5 mm, 3 mm, or in a range defined by any two of these numbers, which helps to relieve the problem of concentrated stress in the transition area and improve properties such as energy density of the electrode plate. Generally, within the foregoing range, a smaller W is more favorable for manufacturing the electrode plate and allows for higher machining efficiency.

In the present invention, the foregoing electrode plate may be a positive electrode plate or a negative electrode plate. In some embodiments, the electrode plate is a negative electrode plate that satisfies $T_1 \times CW = A \times W \times \frac{T_2}{T_1}$ ; or the electrode plate is a positive electrode plate that satisfies $T_1 \times CW = B \times W \times \frac{T_2}{T_1}$ ; where $T_1$ is the thickness of the functional area, measured in $\mu m$; $T_2$ is the minimum thickness of the extension area, measured in $\mu m$; W is a thickness of the extension area in a direction from the functional area to the non-coating area, measured in mm; CW is a surface density of the functional area, measured in $mg/1540.25\ mm^2$; A is a random number greater than or equal to 10 and less than or equal to 35; and B is a random number greater than or equal to 20 and less than or equal to 60. According to researches on the present invention, this condition helps further relieve the problem of concentrated stress in the transition area, improve strength of the current collector, and further guarantee functioning of the electrode plate.

The present invention may use a conventional current collector in the art. For example, when the foregoing electrode plate is a positive electrode plate, the current collector may be aluminum foil; and when the foregoing electrode plate is a negative electrode plate, the current collector may be copper foil, or the like.

In the present invention, the functional coating 2 and the non-coating area 3 may be provided on only one surface of the current collector 1, or the functional coating 2 and the non-coating area 3 may be provided on both front and back surfaces of the current collector 1. Comparatively, the latter case better improves properties such as energy density of the electrode plate. In a specific implementation, the two cases may be selected as required. For example, in some embodiments, two surfaces of the current collector 1 each include a functional coating 2 and a non-coating area 3, where the functional coatings 2 on the two surfaces of the current collector 1 are corresponding in position, and the non-coating areas 3 on the two surfaces of the current collector 1 are corresponding in position. That is, a direct projection of the functional coating 2 on one surface of the current collector 1 parallel to a surface of the electrode plate coincides with a positive projection of the functional coating 2 on the other surface of the current collector 1 parallel to the surface of the electrode plate, and a direct projection of the non-coating area 3 on one surface of the current collector 1 parallel to the surface of the current collector 1 coincides with a direct projection of the non-coating area 3 on the other surface of the current collector 1 parallel to the surface of the current collector (as shown in FIG. 3 to FIG. 5), where the functional areas on the two front and back surfaces of the current collector are corresponding in position, and extension areas on two front and back surfaces of the current collector are corresponding in position. The implementation, however, is not limited thereto. The functional coating and the non-coating area may be provided on other positions of the front and back surfaces of the current collector as required, as long as the foregoing extension area is present between the functional area and the non-coating area.

In the present invention, the functional coating includes, for example, an active substance layer, and may further include, as required, other coatings such as a protection layer fitting with the active substance layer. In some embodiments, the functional area and the extension area each include an active substance, a conductive agent, and a binder, where a mass percentage of the active substance ranges from 85% to 98%, a mass percentage of the conductive agent ranges from 0.01% to 3%, and a mass percentage of the binder ranges from 0.1% to 5%. The functional area and the extension area may have the same or different constituents and the same or different amounts of constituents, and preferably the same in general, to help relieve the problem of concentrated stress in the transition area and simplify a manufacturing process of the electrode plate.

In the present invention, for example, the conductive agent may include at least one of conductive carbon black (SP), acetylene black, Ketjen black, carbon fiber, and the like. The binder may include at least one of polyvinylidene fluoride (PVDF), polyvinyl alcohol, hydroxypropyl cellulose, diacetyl cellulose, polyvinyl chloride, carboxylated polyvinyl chloride, polyvinyl fluoride, ethylidene-containing oxide polymer, polyvinylpyrrolidone, polyurethane, polytetrafluoroethylene, poly(vinylidene fluoride), polyethylene, polypropylene, styrene-butadiene rubber (SBR), acrylic styrene-butadiene rubber, epoxy resin, nylon, and the like. When the electrode plate is a positive electrode plate, the active substance may include at least one of lithium cobalt oxide (LCO), lithium iron phosphate (LFP), lithium manganate, nickel-cobalt-manganese (NCM) ternary material, and nickel-cobalt-aluminum (NCA) ternary material. When the electrode plate is a negative electrode plate, the active substance may include at least one of graphite, mesocarbon microbead (MCMB), hard carbon, soft carbon, silicon, and silicon-carbon compound (or referred to as silicon carbon compound). The graphite may specifically include artificial graphite and/or natural graphite.

The electrode plate of the present invention may be manufactured by a conventional method in the art. For example, a slurry containing a functional coating component may be coated on a surface of a metal foil material (a current collector), followed by drying and rolling, to form a functional coating on the surface of the metal foil material;

then, based on a preset position of the non-coating area, a coating on the preset position of the non-coating area is removed by laser cleaning or the like to expose a surface of the current collector and form the non-coating area, meanwhile a part of the functional coating in proximity of the non-coating area is thinned according to parameters such as shape of the extension area, to form the extension area, and then slitting is performed according to parameters such as preset shape and size of the electrode plate, to obtain electrode plates.

An electrochemical apparatus of the present invention includes the foregoing electrode plate. The electrochemical apparatus may be any apparatus in which electrochemical reaction takes place, and may be particularly an electrochemical apparatus that includes a positive electrode with a positive electrode active substance which is capable of occluding and releasing metal ions (such as lithium ions), and a negative electrode with a negative electrode active substance which is capable of occluding and releasing metal ions. Specific examples of the electrochemical apparatus may be all types of primary batteries, secondary batteries, fuel batteries, solar batteries, or capacitors, and particularly, the electrochemical apparatus may be a lithium-ion secondary battery.

The foregoing electrode plate may be a positive electrode plate, or may be a negative electrode plate, or may include a positive electrode plate and a negative electrode plate. When the electrode plate is a positive electrode plate, the electrochemical apparatus further includes a negative electrode plate, where the negative electrode plate may be a conventional negative electrode plate in the art such as a graphite-containing negative electrode plate and a silicon-containing negative electrode plate; and when the electrode plate is a negative electrode plate, the electrochemical energy storage apparatus further includes a positive electrode plate, where the positive electrode plate may be a conventional positive electrode plate in the art. This is not specifically limited in the present invention.

The electrochemical apparatus further includes a separator located between the positive electrode plate and the negative electrode plate, where the separator is configured to separate the positive electrode plate and the negative electrode plate, and may be a conventional separator in the art. This is not specifically limited in the present invention.

An electronic apparatus of the present invention includes the foregoing electrochemical apparatus which is used as an energy storage apparatus.

To make the objectives, technical solutions and advantages of the present invention clearer, the following further describes the present invention with reference to the specific examples and comparative examples of the present invention. Apparently, the described examples are some but not all of the examples of the present invention. All other embodiments obtained by a person of ordinary skill in the art based on the examples of the present invention without creative efforts shall fall within the protection scope of the present invention.

In the following examples and comparative examples, tensile strength of a cold-pressed electrode plate was determined according to the following process: adjusting positions of an upper clamp and a lower clamp, clamping an electrode plate sample with forceps into the clamps, adjusting high-speed train tension software so as to elongate the electrode plate at a stable speed of 20 mm/min, recording a maximum load p at a shear failure, and calculating the tensile strength of the electrode plate according to the equation: tensile strength = p/(width w of electrode plate sample x thickness h of electrode plate sample). The same electrode plate was tested multiple times according to this process, to obtain average tensile strength N of the electrode plate (N is an average found from the multiple tests).

Examples

(1) Negative electrode plates provided in the following examples 6 to 10 were manufactured according to the following process.
To deionized water, 96% by mass of graphite, 1% by mass of carbon blank, and 3% by mass of styrene-butadiene rubber were added and mixed to prepare a negative electrode slurry; the negative electrode slurry was coated on a surface of a copper foil, followed by drying and rolling, to form a negative electrode active substance layer on the surface of the copper foil; and a groove for mounting a negative tab and exposing the surface of the copper foil was cut into the negative electrode active substance layer by laser cleaning (as shown in FIG. 1 and FIG. 2), and a part of the negative electrode active substance layer in proximity of the groove was thinned to form an extension area (as shown in FIG. 3 to FIG. 5), to prepare a negative electrode plate.
(2) Positive electrode plates provided in the following examples 1 to 5 were manufactured according to the following process.

To N-methylpyrrolidone, 95% by mass of lithium cobalt oxide, 2% by mass of carbon blank, and 3% by mass of polyvinylidene fluoride were added and mixed to prepare a positive electrode slurry; the positive electrode slurry was coated on a surface of an aluminum foil, followed by drying and rolling, to form a positive electrode active substance layer on the surface of the aluminum foil; and a groove for mounting a positive tab and exposing the surface of the aluminum foil was cut into the positive electrode active substance layer by laser cleaning (as shown in FIG. 1 and FIG.

2), and a part of the positive electrode active substance layer in proximity of the groove was thinned to form an extension area (as shown in FIG. 3 to FIG. 5), to prepare a positive electrode plate.

Comparative example 1

A negative electrode plate structure provided in comparative example 1 is the same as those in examples 1 to 5 except that no extension area is provided between the functional area and the groove.

Comparative example 2

A positive electrode plate structure provided in comparative example 2 is the same as those in Examples 6 to 10 except that no extension area is provided between the functional area and the groove.

Table 1 gives the extension area surface states (flat surface shown in FIG. 3/inclined surface shown in FIG. 4/cambered concave surface shown in FIG. 5), extension area minimum thicknesses $T_2$, extension area widths W, functional area thicknesses $T_1$, and measured tensile strengths of electrode plates in examples 1 to 5 and comparative example 1.

Table 2 gives the extension area surface state (flat surface/inclined surface/cambered concave surface), extension area minimum thicknesses $T_2$, extension area widths W, functional area thicknesses $T_1$, and measured tensile strengths of electrode plates in examples 6 to 10 and comparative example 2.

**Table 1 Parameters and tensile strengths of negative electrode plates in examples 1 to 5 and comparative example 1**

| Examples | $T_1$ (μm) | CW (g/ 1540.25 mm$^2$) | W (mm) | $T_2$ (μm) | Extension area surface state | Tensile strength* (MPa) |
|---|---|---|---|---|---|---|
| Comparative Example 1 | 100 | 0.130 | 1.25 | 0 | / | 352 |
| Example 1 | 100 | 0.130 | 1.25 | 50 | See FIG. 3. | 436 |
| Example 2 | 100 | 0.130 | 1.25 | 50 | See FIG. 4. | 432 |
| Example 3 | 100 | 0.130 | 1.25 | 50 | See FIG. 5. | 430 |
| Example 4 | 100 | 0.130 | 3 | 5 | See FIG. 3. | 372 |
| Example 5 | 100 | 0.130 | 3 | 80 | See FIG. 3. | 367 |

**Table 2 Parameters and tensile strengths of positive electrode plates in examples 6 to 10 and comparative example 2**

| Examples | $T_1$ (μm) | CW (g/ 1540.25 mm$^2$) | W (mm) | $T_2$ (μm) | Extension area surface state | Tensile strength (MPa) |
|---|---|---|---|---|---|---|
| Comparative example 2 | 88 | 0.250 | 1.25 | 0 | / | 210 |
| Example 6 | 88 | 0.250 | 1.25 | 40 | See FIG. 3. | 287 |
| Example 7 | 88 | 0.250 | 1.25 | 40 | See FIG. 4. | 271 |
| Example 8 | 88 | 0.250 | 1.25 | 40 | See FIG. 5. | 268 |
| Example 9 | 88 | 0.250 | 3 | 5 | See FIG. 3. | 234 |
| Example 10 | 88 | 0.250 | 3 | 70 | See FIG. 3. | 225 |

According to the test results, the tensile strengths of the positive electrode plates in examples 1 to 5 are significantly higher than that of the positive electrode plate in comparative example 1, and the tensile strengths of the negative electrode plates in examples 6 to 10 are significantly higher than that of the negative electrode plate in comparative example 2. Particularly, the strength of the electrode plate is even more improved in examples 1 to 3 and examples 6 to 8. This shows that after the extension area is added, concentrated stress on the electrode plate that is being cold-pressed is greatly reduced, which accordingly reduces deformation of the transition area and allows for excellent tensile strength of the cold-pressed electrode plate.

The foregoing describes examples of specific embodiments and experimental verification of the present invention in detail. It should be understood that a person of ordinary skill in the art can make various modifications and variations based on the concept of the present invention without creative efforts. Any technical solutions that can be obtained by persons skilled in the art through logical analysis, reasoning, or limited experiments based on the concept of the present invention on the basis of the prior art shall fall within the protection scope defined by the claims.

**Claims**

1. An electrode plate, **characterized by** comprising a current collector, wherein a functional coating and a non-coating area are provided on at least one surface of the current collector, the functional coating comprises a functional area and an extension area that extends from the functional area to the non-coating area, and the extension area has a minimum thickness greater than 0 and a maximum thickness less than a thickness of the functional area.

2. The electrode plate according to claim 1, **characterized in that** the non-coating area comprises at least one of a naked foil area that is located on a side of the functional coating, and a groove that is provided in the functional coating and that exposes a surface of the current collector, wherein a bottom face of the groove is the current collector, and at least two side faces of the groove are the functional coating.

3. The electrode plate according to claim 1, **characterized in that** a thickness of the extension area is substantially unchanged or decreasing in an extension direction toward the non-coating area.

4. The electrode plate according to any one of claims 1 to 3, **characterized in that** a width of the extension area ranges from 0.1 mm to 3 mm in a direction from the functional area to the non-coating area.

5. The electrode plate according to claim 4, **characterized in that** in the direction from the functional area to the non-coating area, a thickness of the extension area at a 1/2 width position is less than a thickness at a joint of the extension area and the functional area.

6. The electrode plate according to any one of claims 1 to 3, **characterized in that** a surface of the extension area is one of a flat surface, an inclined surface, and a cambered surface.

7. The electrode plate according to claim 1, **characterized in that** the functional area has an even thickness which satisfies $0.1 \leq \dfrac{T_2}{T_1} \leq 0.7$, wherein $T_1$ is the thickness of the functional area, and $T_2$ is the minimum thickness of the extension area.

8. The electrode plate according to claim 4, **characterized in that** the functional area has an even thickness which satisfies $0.1 \leq \dfrac{T_2}{T_1} \leq 0.7$, wherein $T_1$ is the thickness of the functional area, and $T_2$ is the minimum thickness of the extension area.

9. The electrode plate according to claim 1 or 7, **characterized in that** at least one of the following conditions is satisfied:

    the thickness of the functional area ranges from 50 $\mu$m to 150 $\mu$m; and
    the minimum thickness of the extension area ranges from 10 $\mu$m to 70 $\mu$m.

10. The electrode plate according to claim 1, **characterized in that**

    the electrode plate is a negative electrode plate that satisfies $T_1 \times CW = A \times W \times \dfrac{T_2}{T_1}$ ; or

    the electrode plate is a positive electrode plate that satisfies $T_1 \times CW = B \times W \times \dfrac{T_2}{T_1}$ ;
    wherein

$T_1$ is the thickness of the functional area, measured in $\mu$m;

$T_2$ is the minimum thickness of the extension area, measured in $\mu$m;

W is a thickness of the extension area in a direction from the functional area to the non-coating area, measured in mm;

CW is a surface density of the functional area, measured in mg/1540.25 mm$^2$;

A is a random number greater than or equal to 10 and less than or equal to 35; and

B is a random number greater than or equal to 20 and less than or equal to 60.

**11.** The electrode plate according to claim 9, **characterized in that**

the electrode plate is a negative electrode plate that satisfies $T_1 \times CW = A \times W \times \dfrac{T_2}{T_1}$ ; or

the electrode plate is a positive electrode plate that satisfies $T_1 \times CW = B \times W \times \dfrac{T_2}{T_1}$ ;

wherein

$T_1$ is the thickness of the functional area, measured in $\mu$m;

$T_2$ is the minimum thickness of the extension area, measured in $\mu$m;

W is a thickness of the extension area in a direction from the functional area to the non-coating area, measured in mm;

CW is a surface density of the functional area, measured in mg/1540.25 mm$^2$;

A is a random number greater than or equal to 10 and less than or equal to 35; and

B is a random number greater than or equal to 20 and less than or equal to 60.

**12.** An electrochemical apparatus, **characterized by** comprising the electrode plate according to any one of the claims 1 to 11.

**13.** An electronic apparatus, **characterized by** comprising the electrochemical apparatus according to claim 12.

FIG. 1

FIG. 2

FIG. 3

FIG. 4

FIG. 5

FIG. 6

## INTERNATIONAL SEARCH REPORT

| International application No. |
|---|
| **PCT/CN2022/070377** |

**A. CLASSIFICATION OF SUBJECT MATTER**

H01M 4/13(2010.01)i;  H01M 4/139(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNTXT, DWPI, SIPOABS; 极片, 正极, 负极, 电极, 涂覆, 涂布, 涂层, 厚, 过渡, 延伸, 空箔, electrode, cathode, anode, coat, uncoated, thickness, transition, extend, empty, foil

**C. DOCUMENTS CONSIDERED TO BE RELEVANT**

| Category* | Citation of document, with indication, where appropriate, of the relevant passages | Relevant to claim No. |
|---|---|---|
| PX | CN 113078284 A (NINGDE AMPEREX TECHNOLOGY LTD.) 06 July 2021 (2021-07-06) claims 1-13 | 1-13 |
| X | CN 101662011 A (BYD COMPANY LTD.) 03 March 2010 (2010-03-03) description page 3 paragraph 1- page 11 last paragraph, figure 1 | 1-13 |
| X | CN 104303344 A (NEC ENERGY DEVICES LTD.) 21 January 2015 (2015-01-21) description, paragraphs 34-46, figures 1-2 | 1-13 |
| X | CN 105742565 A (NINGDE AMPEREX TECHNOLOGY LTD.) 06 July 2016 (2016-07-06) description paragraph 44, figure 2 | 1-13 |
| X | JP 2010108678 A (PANASONIC CORP.) 13 May 2010 (2010-05-13) claim 1, and figure 1 | 1-13 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 February 2022** | **16 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/070377**

| Patent document cited in search report | | | Publication date (day/month/year) | Patent family member(s) | | | Publication date (day/month/year) |
|---|---|---|---|---|---|---|---|
| CN | 113078284 | A | 06 July 2021 | None | | | |
| CN | 101662011 | A | 03 March 2010 | KR | 20110042118 | A | 22 April 2011 |
| | | | | KR | 101324213 | B1 | 06 November 2013 |
| | | | | WO | 2010022669 | A1 | 04 March 2010 |
| | | | | CN | 101662011 | B | 29 May 2013 |
| | | | | JP | 2012501052 | A | 12 January 2012 |
| | | | | JP | 5685536 | B2 | 18 March 2015 |
| | | | | EP | 2319109 | A1 | 11 May 2011 |
| | | | | EP | 2319109 | A4 | 20 February 2013 |
| | | | | EP | 2319109 | B1 | 20 August 2014 |
| | | | | US | 2009162739 | A1 | 25 June 2009 |
| | | | | CA | 2709112 | A1 | 02 July 2009 |
| | | | | WO | 2009079964 | A1 | 02 July 2009 |
| | | | | CN | 101662004 | A | 03 March 2010 |
| | | | | WO | 2009079964 | A8 | 24 June 2010 |
| | | | | EP | 2208248 | A1 | 21 July 2010 |
| | | | | KR | 20100088704 | A | 10 August 2010 |
| | | | | JP | 2011508390 | A | 10 March 2011 |
| | | | | KR | 20110063784 | A | 14 June 2011 |
| | | | | JP | 2012501051 | A | 12 January 2012 |
| | | | | IN | 201004242 | P1 | 10 February 2012 |
| | | | | EP | 2208248 | A4 | 28 March 2012 |
| | | | | CN | 101662004 | B | 30 May 2012 |
| | | | | KR | 101200856 | B1 | 14 November 2012 |
| | | | | KR | 101297941 | B1 | 19 August 2013 |
| | | | | EA | 018448 | B1 | 30 August 2013 |
| | | | | US | 8865335 | B2 | 21 October 2014 |
| | | | | JP | 5646482 | B2 | 24 December 2014 |
| | | | | BR | 200819523 | A2 | 26 May 2015 |
| | | | | BR | 200819523 | B1 | 30 April 2019 |
| CN | 104303344 | A | 21 January 2015 | JP | 2017076631 | A | 20 April 2017 |
| | | | | CN | 107170950 | A | 15 September 2017 |
| | | | | WO | 2013187172 | A1 | 19 December 2013 |
| | | | | US | 2015017523 | A1 | 15 January 2015 |
| | | | | JP | WO2013187172 | A1 | 04 February 2016 |
| | | | | JP | 6116015 | B2 | 19 April 2017 |
| | | | | EP | 2860798 | A1 | 15 April 2015 |
| | | | | EP | 2860798 | A4 | 06 January 2016 |
| | | | | EP | 2860798 | B1 | 10 April 2019 |
| | | | | EP | 2860798 | B8 | 09 October 2019 |
| | | | | CN | 104303344 | B | 02 October 2018 |
| CN | 105742565 | A | 06 July 2016 | CN | 105742565 | B | 05 March 2019 |
| JP | 2010108678 | A | 13 May 2010 | None | | | |

Form PCT/ISA/210 (patent family annex) (January 2015)